Europäisches Patentamt

European Patent Office

Office européen des brevets

(11) Veröffentlichungsnummer: **0 421 063 B1**

# EUROPÄISCHE PATENTSCHRIFT

(45) Veröffentlichungstag der Patentschrift: **30.03.94**

(51) Int. Cl.⁵: **G01G 11/08**, G01G 13/24, G05B 13/04, G05D 7/06

(21) Anmeldenummer: **90113498.1**

(22) Anmeldetag: **14.07.90**

---

(54) **Verfahren zur Verbesserung der adaptiven stochastischen Dosiergenauigkeit einer geregelten Differentialdosierwaage.**

---

(30) Priorität: **06.10.89 DE 3933471**

(43) Veröffentlichungstag der Anmeldung:
**10.04.91 Patentblatt 91/15**

(45) Bekanntmachung des Hinweises auf die Patenterteilung:
**30.03.94 Patentblatt 94/13**

(84) Benannte Vertragsstaaten:
**AT CH DE DK ES FR GB GR IT LI NL SE**

(56) Entgegenhaltungen:
**DE-A- 3 721 186**
**DE-A- 3 926 038**
**US-A- 4 762 252**

**PATENT ABSTRACTS OF JAPAN vol. 13, no. 324 (P-903)(3672), 21. Juli 1989, & JP-A-0192801**

**REGELUNGSTECHNIK, vol. 18, no. 11, November 1970, München, DE, Seiten 485 - 493; A.H. Glattfelder: "Zur Adaptierung von Eingrössen-Regelkreisen mit harmonischen Prüfsignalen"**

Proceedings of the 19th Annual North American Power Symposium, NAPS, October 22-23, 1987, Lister Hall Conference Center, Univ. of Alberta, Edmonton, Alberta, Canada, Ravel F. Ammermann: "Static state estimation in power systems. Comparison of the line flow estimator and the extended Kalman filter"

(73) Patentinhaber: **CARL SCHENCK AG**

**D-64273 Darmstadt(DE)**

(72) Erfinder: **Allenberg, Bernd**
**Rubensstrasse 27**
**D-7500 Karlsruhe(DE)**

(74) Vertreter: **Brandt, Ernst-Ulrich, Dipl.-Phys., Dipl.-Ing.**
**Carl Schenck AG**
**Patentabteilung**
**D-64273 Darmstadt (DE)**

---

EP 0 421 063 B1

**Beschreibung**

Die Erfindung betrifft ein Verfahren zur Verbesserung der Dosiergenauigkeit einer geregelten Differentialdosierwaage gemäß dem Oberbegriff des Patentanspruchs 1 und eine Vorrichtung zur Durchführung des Verfahrens gemäß dem Oberbegriff des Patentanspruchs 4.

Bei geregelten Differentialdosierwaagen wird die Förderstärke in der Regel aus dem zeitlich veränderten Gewicht des Fördersystems ermittelt. Dabei wird das Gewicht in bestimmten Zeitabständen abgetastet und hieraus durch eine Differentation ein Signal gebildet, das der Förderstärke proportional ist, die aufgrund von Schüttgutdichteschwankungen variiert. In diesem Gewichtssignal sind auch Anteile enthalten, die von Aufnehmerstörungen verursacht sind. Derartige Aufnehmerstörungen können z. B. durch Beschleunigungsvorgänge am Meßort, durch elektrisches Rauschen oder Quantisierungsrauschen hervorgerufen sein. Hingegen stellen die Schüttgutdichteschwankungen Störungen dar, die z. B. aufgrund von unterschiedlich klumpigen Schüttgütern oder ungleichförmig zugeführten Materials entstanden sein können. Da derartige Störungen zeitlich unvorhersehbar sind, bezeichnet man sie allgemein auch als stochastische Störungen. Aufnehmerstörungen werden üblicherweise von einem Gewichtsaufnehmersystem nicht identifiziert und verfälschen daher das Dosierergebnis.

Aus der DE-OS 37 21 186 ist eine geregelte Differentialdosierwaage bekannt, bei der die Aufnehmerstörungen und Schüttgutdichteschwankungen durch eine Modellrechnung erfaßt und deren Größe bei der Bildung eines Schätzwertes mit berücksichtigt wird. Bei dem dort beschriebenen Verfahren wird ein Kalman-Filter-Prozeß zur Erzeugung gefilteter Schätzwerte des tatsächlichen Gewichts und der Durchflußrate des Materials angewandt. Das geschätzte Durchflußmengensignal wird dabei auf der Grundlage des gemessenen Gewichts und eines stochastischen Modells für einen bestimmten, das System beeinflussenden Rauschvorgang erzeugt. Die Modelle für die verschiedenen Rauscharten werden entsprechend der Größe ihres Einflusses und der Wahrscheinlichkeit ihres Auftretens modifiziert. Bei dem bekannten Verfahren werden die Aufnehmerstörungen dadurch berücksichtigt, daß vor Inbetriebnahme des speziellen Dosiersystems die Varianz $\sigma^2_n$, die zur Berechnung des Modells dient, experimentell oder empirisch ermittelt werden muß. Bei einem derartigen Verfahren ist es nachteilig, daß das mathematische Modell nur mit Hilfe der vorher experimentell oder empirisch ermittelten Kenngröße der speziellen geregelten Differentialdosierwaage berechnet werden kann.

Der Erfindung liegt deshalb die Aufgabe zugrunde, ein Verfahren und eine Einrichtung der eingangs genannten Art zu schaffen, bei dem die Kenngrößen stochastischer Störungen eines spezielles Aufnehmersystems selbsttätig ermittelbar sind.

Diese Aufgabe wird durch die im Patentanspruch 1 und 4 angegebene Erfindung gelöst. Weiterbildungen und vorteilhafte Ausführungsbeispiele sind in den abhängigen Ansprüchen angegeben.

Die Erfindung hat den Vorteil, daß bestimmte Kennwerte der stoachastischen Störungen, die aus den Aufnehmerstörungen einer Differentialdosierwaage herrühren, im Grunde aus den Meßwerten ableitbar sind. So ist es deshalb auch nicht erforderlich, die entsprechenden Kennwerte wieder neu zu erfassen, wenn Geräteteile des Aufnehmersystems ausgetauscht oder instandgesetzt werden. Weiterhin ist es auch nicht erforderlich, die entsprechenden Gerätekennwerte in gewissen Zeitabständen wieder zu überprüfen. Eine Abschaltung des Regelkreises zur Aufnahme dieser Kennwerte ist deshalb entbehrlich.

Die Erfindung hat darüber hinaus noch den Vorteil, daß der Einstelltakt nicht an den Zeittakt der Regelung gekoppelt ist. Dadurch kann die Regelung besser auf das jeweilige Dosiersystem abgestimmt werden. So ist es möglich, bei bestimmten Dosiersystemen, die weitgehend bei unveränderten Umweltbedingungen arbeiten, die Taktzeit zur Reglereinstellung zu erhöhen, während die Regeltaktzeit sehr klein gewählt werden kann.

Weiterhin besitzt die Erfindung noch den Vorteil, daß die monochromatischen Störungen erkennbar und deshalb von den stochastischen Störungsanteilen getrennt werden können. Dadurch ist eine beträchtliche Verbesserung der Dosiergenauigkeit erreichbar.

Im übrigen bietet die geringe Taktzeit der Reglereinstellung gegenüber einer höheren Taktzeit der Regelungsvorgänge den Vorteil, daß der Rechenaufwand zur Ermittlung des Störungsanteils vergleichsweise gering gehalten werden kann.

Die Erfindung wird anhand eines Ausführungsbeispiels, das in der Zeichnung dargestellt ist, näher beschrieben. Es zeigen:

Fig. 1:    die schematische Darstellung einer geregelten Differentialdosierwaage;

Fig. 2:    den Kennlinienverlauf charakteristischer Spektren und

Fig. 3:    ein bestimmtes Spektrum der stochastischen Störungen und der daraus bestimmten Modellspektren.

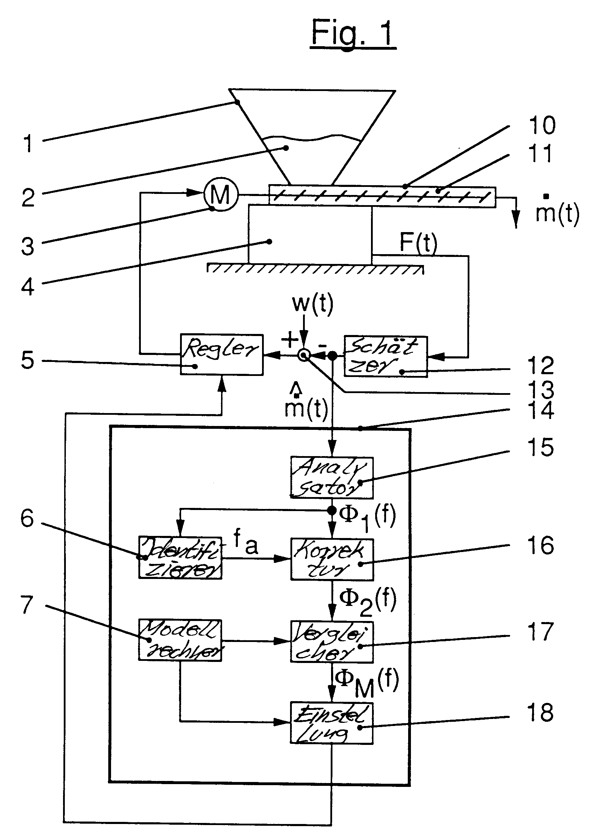

In Fig. 1 der Zeichnung ist eine geregelte Differentialdosierwaage dargestellt, die im wesentlichen aus einem Dosiersystem 10, einer Wägevorrichtung 4, einem Schätzer 12, einer Auswerteeinrichtung 14 und einem Regler 5 besteht.

Das Dosiersystem 10 enthält einen Vorratsbehälter 1, der mit einem Schüttgut 2 gefüllt ist. Vom Vorratsbehälter 1 gelangt das zu dosierende Schüttgut auf ein Austragsorgan, das als Förderschnecke 11 ausgebildet ist. Die Förderschnecke 11 ist mit einem Antriebsmotor 3 verbunden, dessen Drehzahl die Austragsmenge des Schüttgutes bestimmt. Dieses aus dem Vorratsbehälter 1 mit Schüttgut, dem Austragsorgan 11 und dem Antriebsmotor 3 bestehende Dosiersystem 10 ist auf einer Wägevorrichtung 4 angeordnet, die im wesentlichen aus einer Wägezelle besteht. Die Wägezelle liefert dabei ein elektrisches Signal, das der Gewichtskraft des Dosiersystems 10 entspricht und ein Gewichtssignal darstellt. Die Wägevorrichtung 4 ist mit einem Schätzer 12 verbunden, der das Gewichtssignal in bestimmten Zeitabständen abtastet und durch Differentation daraus ein Schätzwertsignal bildet, das der Förderstärke des Austragsorgans 11 entspricht. Der Schätzer 12 ist als eine Differenzierschaltung ausgebildet, dessen Ausgang mit einer Additionsstelle 13 verbunden ist. Das vom Schätzer 12 erzeugte Schätzwertsignal stellt dabei ein Istwertsignal dar. Der Additionsstelle 13 wird noch ein nicht näher dargestelltes Sollwertsignal W(t) zugeführt, das ein Maß für die gewünschte Förderstärke enthält. Soweit das Istwertsignal vom Sollwertsignal abweicht, bildet die Additionsstelle 13 ein Regelabweichungssignal, das dem Regler 5 zugeführt wird. Der Regler 5 bildet daraus ein Stellsignal, das den Antriebsmotor 3 entsprechend der festgestellten Regelabweichung steuert. Der Schätzer 12, der Regler 5, die Additionsstelle 13 und der Stellmotor 3 stellen die Regeleinrichtung dar.

Das vom Schätzer 12 erzeugte Schätzwertsignal enthält auch Störanteile, die auf der zeitlich veränderten Schüttgutdichte des Volumenstroms beruhen. Weiterhin gehen durch die Art der Massenbestimmung z. B. auch Kräfte in das Gewichtssignal ein, die durch Beschleunigungsvorgänge am Aufstellungsort entstanden sind. Auf das Aufnehmersystem wirken aber auch noch Rauschstörungen, die auch eine Meßungenauigkeit bewirken. Diese auf das Aufnehmersystem wirkenden Störungen können als Aufnehmerstörungen bezeichnet werden. Um den Einfluß derartiger Störungen auf die Regelstrecke zu minimieren, wird das Schätzwertsignal einer Auswerteeinrichtung 14 zugeführt, die den Anteil derartiger Störungen ermittelt und daraus ein Signal erzeugt, das die Übertragungsfunktion des Reglers 5 entsprechend der jeweiligen Störanteile anpaßt.

Die Auswerteeinrichtung 14 enthält eine Analysatorschaltung 15, die den Schätzwert für einen bestimmten Zeitraum abtastet. Dabei hat sich ein Abtastzeitraum von ca. 100 Sekunden als zweckmäßig erwiesen. Zur Erzielung einer hinreichenden Genauigkeit wird der Abtastzeitraum in jedem Fall größer gewählt, als der Regelzyklus.

Aus dem abgetasteten Schätzwertsignal wird in der Analysatorschaltung eine diskrete Fourietransformation durchgeführt, die das Leistungsdichtespektrum $\phi 1(f)$ des abgetasteten Schätzwertsignals berechnet. Dieses Frequenzspektrum enthält bei realen Dosierwaageanlagen, insbesondere bei solchen mit umlaufenden Teilen, starke Leistungsanteile in engen Frequenzbereichen. Diese Frequenzbereiche mit starker Leistungsdichte beruhen auf monochromatischen Störungen, deren Spektrum deshalb von dem Spektrum der stochastischen Störungen zu trennen ist. Da die Lage der monomchromatischen Störungen im allgemeinen bekannt ist, wird das Spektrum $\phi 1$ einer Identifizierungsschaltung 6 zugeführt, die daraus die Frequenzbereiche bestimmt, die eine bestimmte Leistungsdichte überschreiten und somit als Frequenzbereiche der monochromatischen Störungen festliegen.

Diese festgestellten Frequenzbereiche mit hoher Leistungsdichte werden einer Korrekturschaltung 16 zugeführt, die die Leistungsdichte in diesen Frequenzbereichen abschwächt, so daß diese dem Wert der Leistungsdichte der stochastischen Störungen entsprechen. Eine derartige Korrekturschaltung 16 kann aber auch so ausgebildet sein, daß nur das Spektrum zwischen den Frequenzbereichen mit hoher Leistungsdichte zur Auswertung der stochastischen Störungen verwandt wird.

Am Ausgang der Korrekturschaltung 16 erhält man daher ein Leistungsdichtespektrum, das nur die Anteile des Spektrums der stochastischen Störungen $\phi 2$ 25 enthält. Dieses wird nun einer Vergleicherschaltung 17 zugeführt, die das Spektrum $\phi 2$ 25 mit von einem Modellrechner 7 erzeugten Modellspektren 20, 26 vergleicht. Dabei errechnet der Modellrechner 7 eine Reihe unterschiedlicher Modellspektren, die die mathematische Struktur der physikalischen Eigenschaften der stochastischen Störungen wiedergeben. Diese Modellspektren errechnet der Modellrechner 7 mit Hilfe vorgegebener Abhängigkeiten, die bekannt sind.

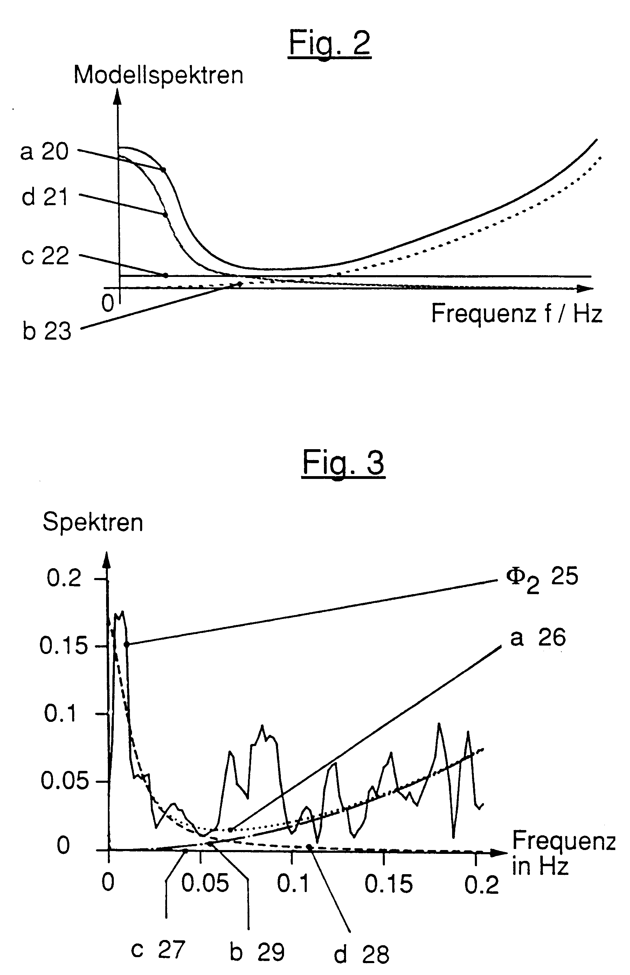

Ein derartiges Modellspektrum der stoachstischen Störungen des Aufnehmersystems und der Schüttgutdichteschwankungen ist in Fig. 2 der Zeichnungen dargestellt. Aus der Zeichnung ist zu entnehmen, daß das Leistungsdichtespektrum b 23, das den Aufnehmerstörungen entspricht, proportional mit dem Quadrat der Frequenz f ansteigt. Weiterhin enthält die Zeichnung die Kennlinien c 22 und d 21, die jeweils verschiedene Anteile der Schüttgewichtsschwankungen darstellen. Der Zeichnung ist aus der Kennlinie d 21 der Anteil des Spektrums der Leistungsdichte der Schüttgewichtsdichteschwankungen zu entnehmen, der proportional der Funktion

$$\frac{1}{1 + (T_\rho \, f)^2}$$

verläuft. Dabei stellt $T_\rho$ eine Zeitkonstante und f die Frequenz der Leistungsdichte der Störungen der Schüttgutdichteschwankungen dar. In der Kennlinie c 22, der charakteristischen Spektren, ist ein konstanter Anteil aus den Schüttgewichtsdichteschwankungen dargestellt. Das gesamte Leistungsdichtespektrum eines Modells der stochastischen Störungen ist aus dem Kennlinienverlauf a 20 zu ersehen, der die Summe der einzelnen Leistungsdichtespektren darstellt. Aus diesem funktionellen Zusammenhang errechnet der Modellrechner 7 eine Fülle von Modellspektren, die durch die Vergleicherschaltung 17 abgefragt und mit den aus dem Schätzwertsignal abgeleiteten Spektrum $\phi2$ 25 verglichen werden.

An diskreten Frequenzpunkten wird nun die im Sinne der kleinsten Fehlerquadrate beste Näherung des durch die Korrekturschaltung 17 gebildeten Leistungsdichtespektrums $\phi2$ 25 durch das Modellspektrum $\phi M$ 26 ermittelt. Ein derartiges Leistungsdichtespektrum $\phi2$ 25 und den daraus ermittelbaren Modellspektren a 26, b 29, c 27 und d 28 ist aus Fig. 3 der Zeichnung ersichtlich. Dabei stellt die Kennlinie c 27 das Spektrum des Anteils der konstanten Schüttgewichtsschwankungen dar, während die Kennlinie d 28 das Spektrum des Anteils der Schüttgewichtsdichteschwankungen wiedergibt, das proportional

$$\frac{1}{1 + (T_\rho \times f)^2}$$

verläuft. Die Kennlinie b 29 zeigt das aus dem Leistungsdichtespektrum $\phi2$ 25 abgeleitete Modellspektrum, das den Aufnehmerstörungen entspricht. Aus der Summe der einzelnen Modellspektren der Kennlinien b 29, c 27 und d 28 ergibt sich somit das Modellspektrum $\phi M$ 26, das dem Leistungsdichtespektrum $\phi2$ 25 am nächsten kommt und in dem Verlauf der Kennlinie a 26 dargestellt ist.

Durch die Feststellung des entsprechenden Modellspektrums $\phi M$ 26 anhand des Leistungsdichtespektrums $\phi2$ 26 ergeben sich auch die entsprechenden Modellparameter $\phi_{nn}$, $\phi_{\rho\rho1}$, $\phi_{\rho\rho2}$ und $T_\rho$. Dabei stellt der Modellparameter $\phi_{nn}$ eine konstante Leistungsdichte eines Rauschspektrums dar, das von den Aufnehmerstörungen verursacht wird. Die Spektren $\phi_{\rho\rho1}$ und $\phi_{\rho\rho2}$ entsprechen konstanten Leistungsdichtespektren, die aus den Anteilen der Schüttgewichtsdichteschwankungen ableitbar sind. Hingegen stellt $T_\rho$ eine Zeitkonstante dar. Diese Modellparameter ergeben sich aus dem funktionellen Zusammenhang der charakteristischen Spektren der Aufnehmerstörungen und der Schüttgutdichtestörungen, die Anhand der Beschreibung zu Fig. 2 der Zeichnung aufgezeigt sind.

Mathematisch ergibt sich daher folgendes Modell der stochastischen Störungen

$$\phi_M(f) = \phi_{\rho\rho}(f) + f^2 \cdot \phi_{nn}$$

$$\phi_{nn} = konstant$$

$$\phi_{\rho\rho}(f) = \phi + \frac{\phi_{\rho\rho2}}{1 + (T_\rho \, f)^2}$$

Aus dem mathematischen Modell ergibt sich auch die Struktur des Modells, die der Modellrechner 7 einer Reglereinstellschaltung 18 zuführt. Die Reglereinstellschaltung 18 errechnet aus der mathematischen Struktur und den Modellparametern $\phi_{nn}$, $\phi_{\rho\rho1}$, $\phi_{\rho\rho2}$ und $T_\rho$ die optimale Übertragungsfunktion $H_K(s)$ des Regelkreises im Sinne der kleinsten mittleren Fehlerquadrate. Dazu werden zunächst die Leistungsdichten nach der Methode der spektralen Faktorisierung entsprechend der folgenden Gleichungen zerlegt:

$$s^2 \phi_{nn}(s) + \phi_{\rho\rho}(s) = A^+(s)A^-(s)$$

$$\phi_{\rho\rho}(s) = A^-(s)(B_+(s) + B_-(s))$$

Wobei A⁺(s) die Pole und Nullstellen der Funktion in der linken s-Halbebene des komplexen Zahlensystems angibt. Dabei wird die komplexe Zahlenebene so dargestellt, daß der Realteil durch die Abzisse und der Imaginärteil durch die Ordinate bestimmt ist. A⁻(s) enthält die Pole und Pole und Nullstellen der Funktion in der rechten komplexen s-Halbebene. B₊(s) enthält die Anteile mit den Polen in der linken s-Halbebene und B₋(s) die Anteile mit Polen in der rechten s-Halbebene. Dabei gibt der Buchstabe s die komplexe Frequenz bei der Laplace-Transformation an, die aus der Frequenz f aus der Gleichung s = C + j2πf ableitbar ist. In dieser Gleichung stellt C eine Konstante dar.

Aus den von der Reglereinstellschaltung 18 errechneten Anteilen A⁺ und B₊ bildet die Reglereinstellschaltung 18 entsprechend der Gleichung

$$H_{\kappa}(s) \;=\; \frac{B_{+}(s)}{A^{+}(s)}$$

die optimale Übertragungsfunktion des Regelkreises. Durch einen weiteren Rechenschritt bestimmt die Reglereinstellschaltung 18 nach einem Verfahren entsprechend der Gleichung

$$S(s)\;R(s) \;=\; \frac{s \quad H_{\kappa}(s)}{1 \;-\; H_{\kappa}(s)}$$

die optimale Übertragungsfunktion des Reglers 5 und bildet daraus ein Signal, das zur Einstellung des Reglers 5 dient.

Ein derartiger Reglereinstellvorgang wird zweckmäßigerweise für einen Erfassungszeitraum von ca. 100 Sekunden durchgeführt. Ein solcher Erfassungszeitraum wird zweckmäßigerweise deshalb gewählt, weil die Genauigkeit des Optimierungsvorgangs mit der Dauer des erfaßten Meßsignals ansteigt. Ein erneuter Einstellvorgang wird üblicherweise erst nach einem Zeitraum von ca. 10 Sekunden wiederholt. Dieser Zeitraum stellt einen Erfahrungswert dar, der weitgehend von der erwarteten Veränderung der stochastischen Störungen bestimmt wird. Es ist deshalb auch denkbar, den Einstellvorgang erst nach weitaus längeren Zeiträumen zu wiederholen.

Ein derartiges Verfahren zur Verbesserung der Dosiergenauigkeit von Differentialdosierwaagen ist auch bei anderen Wägesystemen anwendbar. Darüber hinaus ist dieses Verfahren ganz allgemein bei Regelungsverfahren einsetzbar, die sowohl Störungen mit stochastischen als auch mit monochromatischen Anteilen aufweisen.

## Patentansprüche

1. Verfahren zur Verbesserung der Dosiergenauigkeit einer geregelten Differentialdosierwaage, (1, 3, 5, 11, 12) bei dem der Massenfluß eines Dosiersystems (10) ermittelt wird und derart zur Modifizierung einer Stellgröße dient, daß mindestens zwei stochastische Störgrößen des Regelkreises durch mathematische Modelle berücksichtigt werden, dadurch gekennzeichnet, daß ein Schätzwertsignal, das dem Massenfluß entspricht, für einen bestimmten Zeitraum selbsttätig abgetastet und daraus dessen Leistungsdichtespektrum ($\phi_1$(f)) gebildet wird und aus diesem die Anteile der stochastischen Störungen bestimmt werden, indem aus dem Leistungsdichtespektrum die Anteile der monochromatischen Störungen unberücksichtigt bleiben, wobei das Spektrum der stochastischen Störungen (25) mit mathematischen Modellspektren verglichen und dabei eines der Modellspektren (26) ausgewählt wird, das dem Spektrum (25) der stoachstischen Störungen am nächsten kommt, wobei das ausgewählte Modellspektrum (26) in solche Anteile aufgeteilt wird, die den Aufnehmerstörungen und den Schüttgutdichteschwankungen entsprechen und die zur Einstellung des Reglers (5) dienen.

2. Verfahren nach Anspruch 1, dadurch gekennzeichnet, daß das Leistungsdichtespektrum des Anteils der stochastischen Störungen dadurch ermittelt wird, daß nur dasjenige Spektrum zum Modellvergleich herangezogen wird, das keine Bereiche mit über einem Grenzwert liegender Leistungsdichte enthält.

3. Verfahren nach Anspruch 1 oder 2, dadurch gekennzeichnet, daß die beste Näherung zwischen den Modellspektrum und dem realen Leistungsdichtespektrum der stochastischen Störungen (25) dadurch ermittelt wird, daß eine Vergleicherschaltung (17) eine Vergleichsrechnung nach dem Verfahren der kleinsten Fehlerquadrate durchführt.

**4.** Vorrichtung zur Verbesserung der Dosiergenauigkeit einer mit einer Regeleinrichtung ausgestatteten Differentialdosierwaage, mit einer Auswerteeinrichtung (14), die so ausgebildet ist, daß sie mindestens zwei stochastische Störgrößen durch eine Modellrechnung minimiert, dadurch gekennzeichnet, daß sie (14) eine Analysatorschaltung (15) enthält, die ein Schätzwertsignal für einen bestimmten Zeitraum selbsttätig abtasten kann und dessen Leistungsdichtespektrum ($\phi_1$(f)) bilden kann, wobei aus dem Leistungsdichtespektrum in einer Identifizierschaltung (6) diejenigen Frequenzen ermittelbar sind, die einen bestimmten Wert einer besonders hohen Leistungsdichte überschreiten und in einer Korrekturschaltung (16) dazu dienen können, ein Leistungsdichtespektrum (25) der stochastischen Störgrößen zu bilden, wobei daraus durch eine Vergleicherschaltung (17) dieses Spektrum (25) mit von einer Modellrechnerschaltung (7) errechneten Modellspektren vergleichbar und dasjenige Modell ermittelbar ist, das dem Leistungsdichtespektrum (25) der stochastischen Störgrößen am nächsten kommt, wobei in einer Reglereinstellschaltung (18) aus dem gefundenen Modellspektrum (26) die Spektren ermittelbar sind, die jeweils dem Spektrum der Aufnehmerstörungen (23) und der Schüttgutdichtestörungen (21, 22) entsprechen, woraus die Reglereinstellschaltung (18) ein Einstellsignal für die Optimierung eines Reglers bilden kann.

## Claims

**1.** Method of improving the proportioning accuracy of a regulated differential proportioning weigher (1, 3, 5, 11, 12) in which the mass flow of a proportioning system (10) is determined and serves for modification of a setting value in such a way that at least two stochastic disturbance variables of the regulating circuit are taken into consideration by mathematical models, characterised in that an estimated value signal corresponding to the mass flow is sampled automatically for a specific time period and its output density spectrum ($\phi 1$(f)) is formed therefrom and from this the components of the stochastic disturbances are determined, the components of monochromatic disturbances out of the output density spectrum remaining unconsidered, wherein the spectrum of the stochastic disturbances (25) is compared with mathematical model spectra and one of the model spectra (26) is selected which comes closest to the spectrum (25) of the stochastic disturbances, wherein the selected model spectrum (26) is divided into those components which correspond to the sensor disturbances and to the bulk material density fluctuations and which serve for setting of the regulator (5).

**2.** Method according to Claim 1, characterised in that the output density spectrum of the component of the stochastic disturbances is determined by using for the model comparison only the spectrum which contains no regions with an output density lying above a boundary value.

**3.** Method according to Claim 1 or 2, characterised in that the best approximation between the model spectrum and the real output density spectrum of the stochastic disturbances (25) is determined by a comparator circuit (17) carrying out a comparison calculation using the least squares method.

**4.** Device for improving the proportioning accuracy of a differential proportioning weigher equipped with a regulating arrangement, with an evaluation arrangement (14) which is constructed so that it minimises at least two stochastic disturbance variables by a model calculation, characterised in that it (14) contains an analyser circuit (15) which can automatically sample an estimated value signal for a specific time period and can form the output density spectrum ($\phi 1$(f)) thereof, wherein from the output density spectrum there are determined in an identification circuit (6) those frequencies which exceed a specific value of a particularly high output density and can be used in a correction circuit (16) to form an output density spectrum (25) of the stochastic disturbance variables, wherein from this the spectrum (25) can be compared by a comparator circuit (17) with model spectra calculated by a model calculator circuit (7) and the model which comes closest to the output density spectrum (25) of the stochastic disturbance variables can be determined, wherein in a regulator setting circuit (18) the spectra can be determined from the model spectrum (26) obtained, which in each case correspond to the spectrum of the sensor disturbances (23) and the bulk material density disturbances (21, 22), from which the regulator setting circuit (18) can form a setting signal for the optimisation of a regulator.

## Revendications

**1.** Procédé destiné à améliorer la précision de dosage d'une balance réglée de dosage différentiel (1, 3, 5, 11, 12), dans lequel le flux massique d'un système de dosage (10) est déterminé et sert à modifier une grandeur de réglage de manière qu'au moins deux grandeurs de perturbation stochastiques du circuit de régulation soient prises en compte par des modèles mathématiques, caractérisé en ce qu'un signal de valeur d'estimation, qui correspond au flux massique, est automatiquement détecté pendant une durée déterminée et son spectre de puissance volumique ($\phi 1(f)$) est formé à partir de celui-ci et à partir de ce spectre les composantes des perturbations stochastiques sont déterminées en ce que les composantes des perturbations monochromatiques dans le spectre de puissance volumique ne sont pas prises en compte, le spectre des perturbations stochastiques (25) étant comparé à des spectres modèles mathématiques et en ce que l'on sélectionne l'un des spectres modèles (26) qui se rapproche le plus du spectre (25) des perturbations stochastiques, le spectre modèle (26) sélectionné étant partagé en composantes qui correspondent aux perturbations du capteur et aux fluctuations de la densité du produit en vrac et servent au réglage du régulateur (5).

2. Procédé selon la revendication 1, caractérisé en ce que le spectre de puissance volumique de la composante des perturbations stochastiques est déterminé en ce qu'on utilise uniquement pour la comparaison des modèles le spectre qui ne contient pas de zones présentant une puissance volumique supérieure à une valeur limite.

3. Procédé selon les revendications 1 ou 2, caractérisé en ce que la meilleure approximation entre le spectre modèle et le spectre de puissance volumique réel des perturbations stochastiques (25) est déterminé en ce qu'un circuit de comparateur (17) procède à un calcul de comparaison suivant le procédé des plus petits carrés d'erreurs.

4. Dispositif destiné à améliorer la précision de dosage d'une balance de dosage différentiel équipée d'un dispositif de régulation, comportant un dispositif d'exploitation (4) qui est conçu de manière à minimiser au moins deux grandeurs de perturbations stochastiques par un calcul sur modèles, caractérisé en ce qu'il (14) comprend un circuit d'analyseur (15) qui peut détecter automatiquement un signal de valeur d'estimation pendant une durée déterminée et peut former son spectre de puissance volumique ($\phi 1(f)$), les fréquences qui dépassent une valeur déterminée d'une puissance volumique particulièrement élevée étant déterminées à partir du spectre de puissance volumique dans un circuit d'identification (6) et pouvant servir dans un circuit de correction (16) à former un spectre de puissance volumique (25) des grandeurs de perturbations stochastiques, à partir de celui-ci un circuit de comparaison (17) pouvant comparer ce spectre (25) avec des spectres modèles calculés par un circuit de calculateur de modèles (7) et le modèle qui se rapproche le plus du spectre de puissance volumique (25) des grandeurs de perturbations stochastiques pouvant être déterminé, dans un circuit de réglage du régulateur (18) les spectres qui correspondent aux perturbations du capteur (23) et aux perturbations de la densité du produit en vrac (21, 22), pouvant être déterminés dans un circuit de réglage du régulateur (18) à partir du spectre modèle (26) trouvé, le circuit de réglage du régulateur (18) pouvant former, à partir de ceci, un signal de réglage pour l'optimisation d'un régulateur.

# Fig. 1

## Fig. 2

Modellspektren

a 20
d 21
c 22
b 23

0    Frequenz f / Hz

## Fig. 3

Spektren

0.2
0.15
0.1
0.05
0

$\Phi_2$ 25
a 26

0    0.05    0.1    0.15    0.2    Frequenz in Hz

c 27    b 29    d 28